# FASCICULE DE BREVET EUROPEEN

(11) **EP 2 541 964 B1**
(45) Date de publication et mention de la délivrance du brevet: **30.08.2017**
(21) Numéro de dépôt: 12173840.5
(22) Date de dépôt: 27.06.2012
(51) Int. Cl.: H04N 21/4623, H04N 21/266, H04N 21/418, G06K 19/077, G06K 19/073

(54) **Systeme et procede d'emission et de reception de contenus multimedias embrouilles**
System und Verfahren zum Verschicken und Empfangen von vermischten Multimediainhalten
System and method for transmitting and receiving scrambled multimedia content

(30) Priorité: 28.06.2011 FR 1155758
(43) Date de publication de la demande: 02.01.2013
(73) Titulaire: Viaccess, 92057 Paris La Defense (FR)
(72) Inventeur: Dubroeucq, Gilles, 28130 Saint Piat (FR)
(74) Mandataire: Colombo, Michel

(56) Documents cités:
- WO-A1-2008/025900
- KR-B1- 101 017 425
- NL-A- 9 301 540
- US-A- 5 847 372
- US-A1- 2002 023 963
- US-B1- 6 922 780

## Description

L'invention concerne un système et un procédé d'émission et de réception d'un contenu multimédia embrouillé ainsi qu'un processeur de sécurité pour ce système.

L'invention s'applique en particulier au domaine du contrôle d'accès pour la fourniture de programmes multimédias payants tels que la télévision payante.

Il est connu de diffuser plusieurs contenus multimédias en même temps. Pour cela, chaque contenu multimédia est diffusé sur son propre canal. Le canal utilisé pour transmettre un contenu multimédia est également connu sous le terme de « chaine ». Un canal correspond typiquement à une chaine de télévision. Cela permet à un utilisateur de choisir simplement le contenu multimédia qu'il souhaite visualiser en changeant de canal.

Dans cette description, on désigne plus spécifiquement par « contenu multimédia » un contenu audio et/ou visuel destiné à être restitué sous une forme directement perceptible et compréhensible par un être humain. Typiquement, un contenu multimédia correspond à une succession d'images formant un film, une émission de télévision ou de la publicité. Un contenu multimédia peut également être un contenu interactif tel qu'un jeu.

Pour sécuriser et soumettre la visualisation des contenus multimédias à certaines conditions, comme la souscription d'un abonnement payant par exemple, les contenus multimédias sont diffusés sous forme embrouillée et non pas en clair. Dans cette description, le canal est dit « embrouillé » lorsque le contenu multimédia diffusé sur ce canal est embrouillé.

Plus précisément, chaque contenu multimédia est divisé en une succession de cryptopériodes. Pendant toute la durée d'une cryptopériode, les conditions d'accès au contenu multimédia embrouillé demeurent inchangées. En particulier, pendant toute la durée d'une cryptopériode, le contenu multimédia est embrouillé avec le même mot de contrôle. Généralement, le mot de contrôle varie d'une cryptopériode à l'autre.

De plus, le mot de contrôle est généralement spécifique à un contenu multimédia, ce dernier étant aléatoirement ou pseudo aléatoirement tiré.

Ici, les termes « embrouiller » et « chiffrer » sont considérés comme des synonymes. Il en est de même pour les termes « désembrouiller » et « déchiffrer ».

Le contenu multimédia en clair correspond au contenu multimédia avant que celui-ci ne soit embrouillé. Celui-ci peut être rendu directement compréhensible par un être humain sans avoir recours à des opérations de désembrouillage et sans que sa visualisation soit soumise à certaines conditions.

Les mots de contrôle nécessaires pour désembrouiller les contenus multimédias sont transmis de manière synchronisée avec les contenus multimédias. Pour cela, par exemple, les mots de contrôle sont multiplexés avec le contenu multimédia embrouillé.

Pour sécuriser la transmission des mots de contrôle, ceux-ci sont transmis aux terminaux sous forme de cryptogrammes contenus dans des messages ECM (Entitlement Control Message). On désigne ici par « cryptogramme » une information insuffisante à elle seule pour retrouver le mot de contrôle en clair. Ainsi, si la transmission du mot de contrôle est interceptée, la seule connaissance du cryptogramme du mot de contrôle ne permet pas de retrouver le mot de contrôle permettant de désembrouiller le contenu multimédia.

Pour retrouver le mot de contrôle en clair, c'est-à-dire le mot de contrôle permettant de désembrouiller directement le contenu multimédia, celui-ci doit être combiné avec une information secrète. Par exemple, le cryptogramme du mot de contrôle est obtenu en chiffrant le mot de contrôle en clair avec une clé cryptographique. Dans ce cas, l'information secrète est la clé cryptographique permettant de déchiffrer ce cryptogramme. Le cryptogramme du mot de contrôle peut aussi être une référence à un mot de contrôle stocké dans une table contenant une multitude de mots de contrôle possibles. Dans ce cas, l'information secrète est la table associant à chaque référence un mot de contrôle en clair.

L'information secrète doit être préservée en lieu sûr. Pour cela, il a déjà été proposé de stocker l'information secrète dans des processeurs de sécurité tels que des cartes à puce directement connectées à chacun des terminaux.

Par ailleurs, les contenus multimédias diffusés sur les différents canaux peuvent être coordonnés temporellement entre eux. Par exemple, les instants de diffusion des contenus multimédias sont réglés pour respecter les horaires de diffusion indiqués sur une grille de programmes préétablie. Chaque terminal sur un canal donné reçoit donc sensiblement en même temps le même contenu multimédia. On dit que ces contenus multimédias sont des flux « live » ou « linéaires » car l'utilisateur ne contrôle par leur instant de transmission.

Dans ce contexte, des attaques ont été développées pour permettre à des utilisateurs de désembrouiller des contenus multimédias pour lesquels ils n'ont pas acquis licitement des droits d'accès.

Par exemple des méthodes de cryptanalyse d'un processeur de sécurité sont décrites dans l'article suivant :
Hagai Bar-EI, Hamid Choukri, David Naccache, Michael Tunstall, Claire Whelan, « *The sorcerer's apprentice Guide to Fault Attacks* »

Ainsi malgré les précautions prises pour sécuriser les processeurs de sécurité, ceux-ci sont parfois victimes d'une cryptanalyse réussie. Les données secrètes qu'ils comportent deviennent alors connues, il s'agit essentiellement des clés et des algorithmes cryptographiques utilisés. Il est alors possible de produire des processeurs de sécurité dits « pirates » permettant de désembrouiller les contenus multimédias sans payer d'abonnement.

Pour lutter contre ce problème, des systèmes connus d'émission et de réception d'un contenu multimédia comportent :
- un dispositif de diffusion d'une succession temporelle d'un premier contenu multimédia embrouillé puis d'un second contenu multimédia embrouillé, ce dispositif étant apte à chiffrer le contenu d'un premier message ECM (Entitlement Control Message) ou EMM (Entitlement Management Message) nécessaire pour désembrouiller le premier contenu multimédia selon un premier procédé cryptographique et à chiffrer le contenu d'un second message ECM ou EMM nécessaire pour désembrouiller le second contenu multimédia selon un second procédé cryptographique différent du premier procédé cryptographique,
- des terminaux aptes à recevoir les premier et second contenus multimédias embrouillés et les premier et second messages ECM ou EMM,
- au moins un processeur de sécurité amovible équipé d'un support de préhension et d'une puce électronique nominale apte à traiter les messages ECM et EMM reçus par le terminal, cette puce électronique nominale étant logée sans aucun degré de liberté à l'intérieur du support de préhension, chaque puce électronique comportant un calculateur électronique et une mémoire non volatile en lecture seule uniquement accessible par ce calculateur et chaque puce électronique étant déplaçable de façon réversible entre une position insérée dans laquelle la puce est apte à communiquer avec le terminal pour recevoir les messages ECM et EMM à traiter et une position retirée dans laquelle la communication entre la puce et le terminal est impossible, la mémoire non volatile en lecture seule de la puce nominale contenant des premières données secrètes nécessaires pour déchiffrer le contenu du premier message ECM ou EMM chiffré selon le premier procédé cryptographique et étant dépourvue de secondes données secrètes nécessaires pour déchiffrer le contenu des seconds messages ECM ou EMM chiffrés selon le second procédé cryptographique, et
- au moins une puce électronique de secours apte à remplacer la puce nominale pour traiter les messages ECM et EMM reçus par le terminal, la mémoire en lecture seule de la puce de secours comportant les secondes données secrètes.

La puce de secours est logée dans un nouveau processeur de sécurité ayant un support de préhension identique à celui dans lequel est logée la puce nominale mais mécaniquement indépendant de ce dernier. Dès lors, en cas de cryptanalyse réussie, le processeur de sécurité est piraté, et l'opérateur envoie à chaque abonné le nouveau processeur de sécurité, puis l'abonné remplace l'ancien processeur de sécurité par le nouveau processeur de sécurité.

Ce système permet de remplacer les données secrètes contenues dans la mémoire non volatile en lecture seule par d'autres données secrètes. De plus, le nouveau processeur de sécurité dispose de mécanismes de protections distincts des anciens processeurs de sécurité. La sécurité du système est alors restaurée car les anciens processeurs de sécurité ne sont plus utilisables pour désembrouiller les contenus multimédias. En effet, en parallèle, le second procédé cryptographique est utilisé pour chiffrer les informations contenues dans les messages ECM et EMM de sorte que ces contenus ne sont déchiffrables que par les nouveaux processeurs de sécurité.

Toutefois, ce système est peu pratique car il suppose l'envoi à chaque abonné d'un nouveau processeur de sécurité en cas de cryptanalyse réussie de la puce nominale.

De l'état de la technique est également connu de :
- US5 847 372A,
- US2002/023963A1,
- NL9301540A,
- KR101017425B1,
- WO2008/025900A1.

Le document US6922780 décrit une carte à puce ayant deux processeurs: un processeur nominal et un processeur de secours pouvant être activé si le processeur nominal cesse de fonctionner normalement. Le basculement vers la puce de secours est fait en changeant l'orientation de la carte dans le récepteur.

L'invention vise à remédier à ce problème en proposant un système dans lequel le remplacement de la puce nominale par la puce de secours est plus simple. Elle a donc pour objet un système d'émission et de réception conforme à la revendication 1.

Dans le système ci-dessus, le processeur de sécurité est équipé de deux puces électroniques dès l'origine c'est-à-dire la puce nominale et la puce de secours. Ainsi, lorsqu'un changement de puce électronique est souhaitable, il n'est pas nécessaire d'envoyer à chaque abonné la puce de secours. Au contraire, dans le système ci-dessus, il suffit simplement de remplacer la puce nominale par la puce de secours qui est déjà à la disposition de l'abonné. Ainsi, ce système permet de faire l'économie de l'envoie d'un nouveau processeur de sécurité comportant la puce de secours.

Le fait que les deux puces électroniques soient logées dans le même support permet également de faire l'économie d'un support de préhension par rapport au système de l'état de l'art.

De plus, la puce nominale et la puce de secours sont solidaires du même support de préhension de sorte que le risque de perdre la puce de secours avant que celle-ci ne soit utilisée est nul.

Enfin, le changement de procédé cryptographique rend le remplacement de la puce nominale par la puce de secours irréversible. En effet, après ce remplacement, la puce nominale n'est plus utilisable pour désembrouiller les contenus multimédias.

L'invention a également pour objet un processeur de sécurité pour la mise en oeuvre du système ci-dessus.

Les modes de réalisation de ce processeur de sécurité peuvent comporter une ou plusieurs des caractéristiques des revendications dépendantes.

Ces modes de réalisation du processeur de sécurité présentent en outre les avantages suivants :
- l'utilisation d'un connecteur électrique commun à la puce nominale et à la puce de secours permet de rendre la puce de secours inaccessible tant que la puce nominale est utilisée, ce qui rend très difficile toute tentative de cryptanalyse de cette puce de secours avant qu'elle soit utilisée;
- le fait que seule la puce nominale puisse faire basculer l'aiguilleur vers la position de secours rend encore plus difficile l'accès à la puce de secours tant que la puce nominale est utilisée puisqu'il faut avant cela réaliser la cryptanalyse de la puce nominale si l'on souhaite réaliser un basculement illicite vers la position de secours;
- le fait que l'instruction d'activation de la puce de secours soit transmise dans un message ECM ou EMM accroît la sécurité du système car le basculement vers la puce de secours peut alors uniquement être déclenché à partir du dispositif de diffusion ;
- l'utilisation d'un interrupteur irréversible rend définitif le basculement de la puce nominale vers la puce de secours de sorte que la puce nominale ne peut plus être utilisée ;
- l'utilisation d'un connecteur électrique nominal et d'un connecteur électrique de secours permet de remplacer la puce nominale par la puce de secours par une simple rotation du processeur de sécurité autour d'un axe de symétrie de révolution ;
- le fait que la puce de secours soit dans un état désactivé avant son utilisation rend toute tentative de cryptanalyse de cette puce de secours plus difficile.

L'invention a également pour objet un procédé d'émission et de réception d'un contenu multimédia embrouillé conforme à la revendication indépendante de procédé.

L'invention sera mieux comprise à la lecture de la description qui va suivre, donnée uniquement à titre d'exemple non limitatif et faite en se référant aux dessins sur lesquels :
- la figure 1 est une illustration schématique d'un système d'émission et de réception de contenus multimédias ;
- la figure 2 est une illustration en vue de dessus d'un processeur de sécurité utilisé dans le système de la figure 1 ;
- la figure 3 est une illustration partielle et en vue éclatée du processeur de sécurité de la figure 2 ;
- la figure 4 est une illustration schématique de différents blocs fonctionnels intégrés au processeur de sécurité des figures 2 et 3 ;
- la figure 5 est un organigramme d'un procédé d'émission et de réception de contenus multimédias à l'aide du système de la figure 1 ;
- la figure 6 est une illustration schématique d'un autre mode de réalisation d'un processeur de sécurité utilisable dans le système de la figure 1 ;
- la figure 7 est un organigramme d'un procédé d'émission et de réception de contenus multimédias utilisant le processeur de sécurité de la figure 6.

Dans ces figures les mêmes références sont utilisées pour désigner les mêmes éléments.

Dans la suite de cette description, les caractéristiques et fonctions bien connues de l'homme du métier ne sont pas décrites en détail. De plus, la terminologie utilisée est celle des systèmes d'accès conditionnels à des contenus multimédias. Pour plus d'informations sur cette terminologie, le lecteur peut se reporter au document suivant :
« Functional Model of Conditional Access System », EBU Review, Technical European Broadcasting Union, Brussels, BE, n° 266, 21 décembre 1995.

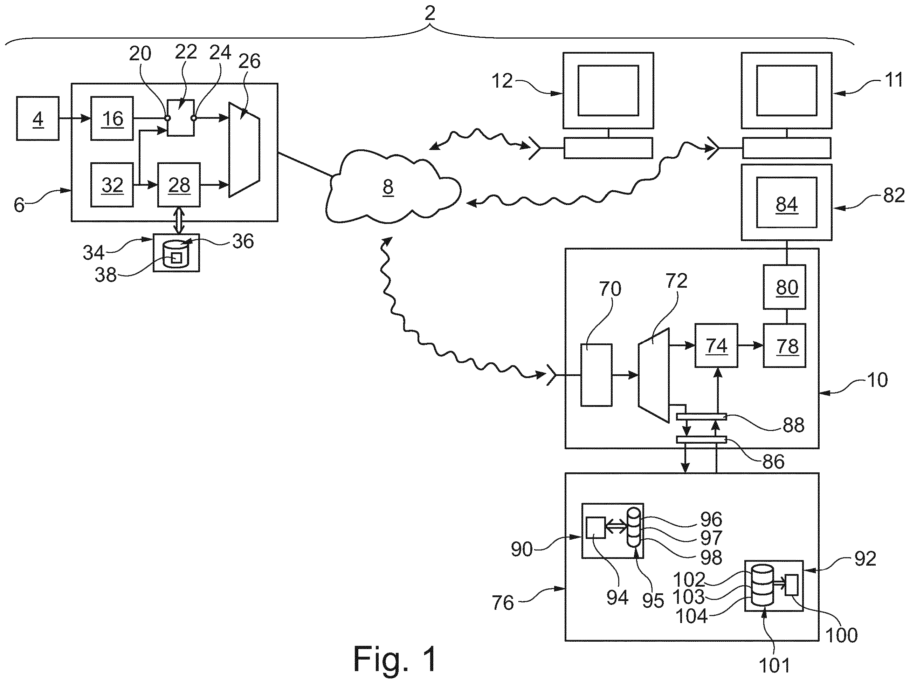

La figure 1 représente un système 2 d'émission et de réception de contenus multimédias embrouillés. Les contenus multimédias émis sont des contenus multimédias linéaires. Par exemple, un contenu multimédia correspond à une séquence d'un programme audiovisuel tel qu'une émission de télévision ou un film.

Les contenus multimédias en clair sont générés par une ou plusieurs sources 4 et transmis à un dispositif 6 de diffusion. Le dispositif 6 diffuse les contenus multimédias simultanément vers une multitude de terminaux de réception à travers un réseau 8 de transmission d'informations. Les contenus multimédias diffusés sont synchronisés temporellement les uns avec les autres pour, par exemple, respecter une grille préétablie de programmes.

Le réseau 8 est typiquement un réseau grande distance de transmission d'informations tel que le réseau Internet ou un réseau satellitaire ou tout autre réseau de diffusion tel que celui utilisé pour la transmission de la télévision numérique terrestre (TNT).

Pour simplifier la figure 1, seuls trois terminaux 10 à 12 de réception sont représentés.

Le dispositif 6 comprend un encodeur 16 qui compresse les contenus multimédias qu'il reçoit. L'encodeur 16 traite des contenus multimédias numériques. Par exemple, cet encodeur fonctionne conformément à la norme MPEG2 (Moving Picture Expert Group - 2) ou la norme UIT-T H264.

Les contenus multimédias compressés sont dirigés vers une entrée 20 d'un embrouilleur 22. L'embrouilleur 22 embrouille chaque contenu multimédia compressé pour conditionner sa visualisation à certaines conditions telles que l'achat d'un titre d'accès par les utilisateurs des terminaux de réception. Les contenus multimédias embrouillés sont restitués sur une sortie 24 raccordée à l'entrée d'un multiplexeur 26.

L'embrouilleur 22 embrouille chaque contenu multimédia compressé à l'aide d'un mot de contrôle CW_{i,t} qui lui est fourni, ainsi qu'à un système 28 d'accès conditionnel, par un générateur 32 de clés. L'indice i est un identifiant du canal sur lequel est diffusé le contenu mulimédia embrouillé et l'indice t est un numéro d'ordre identifiant la cryptopériode embrouillée avec ce mot de contrôle.

Typiquement, cet embrouillage est conforme à une norme telle que la norme DVB-CSA (Digital Video Broadcasting - Common Scrambling Algorithm), ISMA Cryp (Internet Streaming Media Alliance Cryp), SRTP (Secure Real-time Transport Protocol), AES (Advanced Encryption Standard), ... etc.

Pour chaque canal i, le système 28 génère des messages ECM_{i,t} (Entitlement Control Message) contenant au moins le cryptogramme CW*_{i,t} du mot de contrôle CW_{i,t} généré par le générateur 32 et utilisé par l'embrouilleur 22 pour embrouiller la cryptopériode t du canal i. Ces messages et les contenus multimédias embrouillés sont multiplexés par le multiplexeur 26, ces derniers étant respectivement fournis par le système 28 d'accès conditionnel et par l'embrouilleur 22, avant d'être transmis sur le réseau 8.

Le système 28 est plus connu sous l'acronyme CAS (Conditional Access System).

Le système 28 insère également dans chaque ECM :
- les cryptogrammes CW*_{i,t} et CW*_{i,t+1} des mots de contrôle CW_{i,t} et CW_{i,t+1} permettant de désembrouiller les cryptopériodes t et t+1 immédiatement consécutives du canal i,
- des conditions d'accès CA destinées à être comparées à des titres d'accès acquis par l'utilisateur, et
- une signature ou une redondance cryptographique MAC permettant de vérifier l'intégrité du message ECM.

Le message ECM contenant la paire de mots de contrôle CW_{i,t}/CW_{i,t+i} est noté ECM_{i,t} dans la suite de la description où :
- l'indice i identifie le canal, et
- l'indice t est un numéro d'ordre identifiant la position temporelle de ce message ECM par rapport aux autres messages ECM différents émis pour désembrouiller le canal i.

A titre d'illustration, ici, l'embrouillage et le multiplexage des contenus multimédias est conforme au protocole DVB-Simulcrypt (ETSI TS 103 197).

Le système 28 génère également des messages EMM (Entitlement Control Message). Généralement, contrairement aux messages ECM, les messages EMM sont destinés à véhiculer des informations adressées à un seul ou à un groupe limité de terminaux. Par exemple, les messages EMM sont utilisés pour transmettre des titres d'accès et une clé mensuelle d'exploitation Km à un terminal. La clé mensuelle est la clé utilisée pour déchiffrer les cryptogrammes CW*_{i,t} et CW*_{i,t+1}. Les titres d'accès et la clé mensuelle Km transmis au terminal sont d'abord chiffrés avec une clé de gestion secrète Kt du terminal et seuls les cryptogrammes ainsi obtenus sont incorporés au message EMM. Pour cela, le système 28 a besoin de connaître les données secrètes associées à ce terminal telles que sa clé Kt. A cet effet, le système 28 est raccordé un système 34 d'autorisation d'accès plus connu sous l'acronyme SAS (Subscriber Authorisation System). La clé secrète Kt est différente d'un terminal à l'autre. Typiquement la clé secrète est enregistrée dans un processeur de sécurité inséré dans ce terminal.

Ce système 34 comporte notamment une mémoire 36 dans laquelle est enregistrée une base de données 38. La base de données 38 associe à chaque identifiant d'un processeur de sécurité d'un terminal, les données secrètes nécessaires pour générer des cryptogrammes qu'il puisse déchiffrer correctement.

Dans cet exemple, les terminaux 10 à 12 sont identiques. Aussi, par la suite, seul le terminal 10 est décrit plus en détail.

Le terminal 10 désembrouille le canal i pour l'afficher en clair sur un afficheur.

Le terminal 10 comprend un récepteur 70 de contenus multimédias diffusés. Ce récepteur 70 est raccordé à l'entrée d'un démultiplexeur 72 qui transmet d'un côté le contenu multimédia à un désembrouilleur 74 et d'un autre côté les messages ECM_{i,t} et EMM (Entitlement Management Message) à un processeur de sécurité 76.

Le désembrouilleur 74 désembrouille le contenu multimédia embrouillé à partir du mot de contrôle transmis par le processeur 76. Le contenu multimédia désembrouillé est transmis à un décodeur 78 qui le décode. Le contenu multimédia décompressé ou décodé est transmis à une carte graphique 80 qui pilote l'affichage de ce contenu multimédia sur un afficheur 82 équipé d'un écran 84. L'afficheur 82 affiche en clair le contenu multimédia sur l'écran 84. Par exemple, l'afficheur 82 est une télévision, un ordinateur ou encore un téléphone fixe ou mobile. Ici, l'afficheur est une télévision.

Typiquement, l'interface entre le terminal 10 et le processeur 76 comprend un lecteur 86 géré par un module 88 de contrôle d'accès. Ici, le lecteur 86 est un lecteur de cartes à puce. Le module 88 gère notamment :
- la transmission des messages ECM et EMM démultiplexés au processeur 76, et
- la réception des mots de contrôle déchiffré par le processeur 76 et leur transmission au désembrouilleur 74.

Le processeur 76 traite des informations confidentielles telles que des clés cryptographiques. Pour préserver la confidentialité de ces informations, il est conçu pour être le plus robuste possible vis-à-vis des tentatives d'attaques menées par des pirates informatiques. Il est donc plus robuste vis-à-vis de ces attaques que les autres composants du terminal 10. Ici, le processeur 76 est une carte à puce.

Le processeur 76 est équipé d'une puce électronique nominale 90 et d'une puce électronique 92 de secours. Chaque puce électronique comprend un calculateur électronique et des moyens de stockage d'informations uniquement accessibles par le calculateur. Typiquement, les moyens de stockage d'informations de chaque puce comprennent :
- une mémoire non volatile en lecture seule,
- une mémoire non volatile réinscriptible, et
- une mémoire volatile.

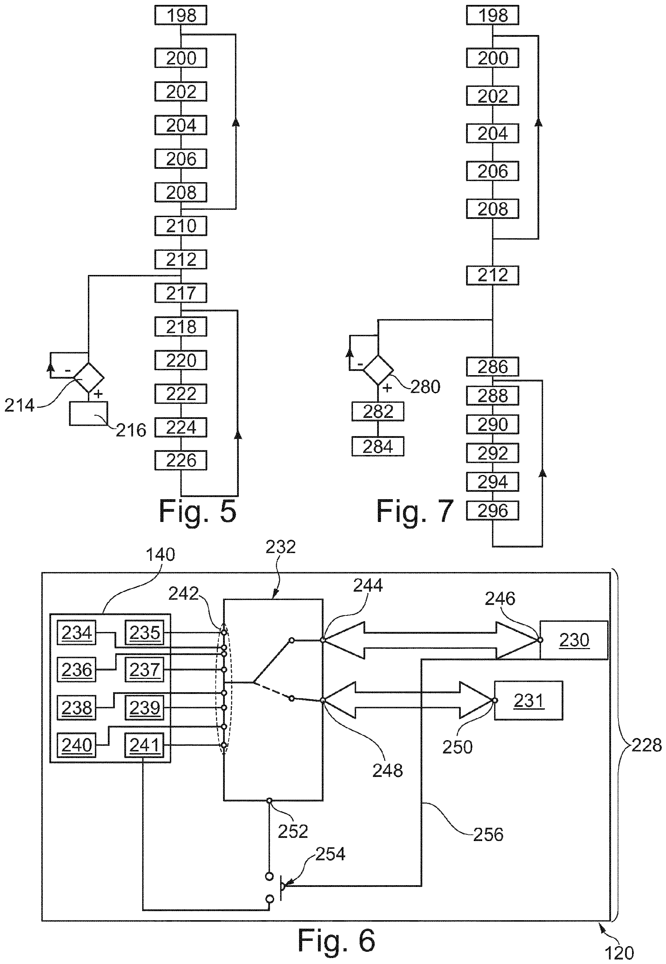

La mémoire non volatile en lecture seule contient des données secrètes nécessaires au déchiffrement des mots de contrôle. La mémoire non volatile réinscriptible contient en outre des données configurables telles que des titres d'accès et des clés mensuelles Km. Sur la figure 1, le calculateur, les moyens de stockage d'informations, la mémoire non volatile en lecture seule, la mémoire non volatile réinscriptible et la mémoire volatile de la puce 90 portent, respectivement, les références 94 à 98. Ces mêmes éléments portent, respectivement, les références 100 à 104 pour la puce 92. Chaque calculateur 94, 100 est un calculateur électronique programmable apte à exécuter des instructions enregistrées sur un support d'enregistrement d'informations. A cet effet, les mémoires 96 et 102 non volatile en lecture seule contiennent des données secrètes telles que les instructions et les clés secrètes nécessaires pour l'exécution du procédé de la figure 5 ou 7. Ici, les données secrètes enregistrées dans ces mémoires 96 et 102 comportent en outre
- le code d'un système d'exploitation,
- le code des routines exécutées pour traiter les messages ECM et EMM reçus et des algorithmes de déchiffrement/chiffrement, et
- des clés cryptographiques.

Plus précisément et à titre d'illustration, la mémoire 96 contient en outre une clé secrète Kt1 et le code exécutable d'un algorithme ALGO1 de déchiffrement des cryptogrammes des mots de contrôle. La mémoire 102 contient de façon similaire une clé secrète Kt2 et le code exécutable d'un algorithme ALGO2 de déchiffrement des cryptogrammes des mots de contrôle.

Dans ces conditions, la base de données 38 associe notamment à chaque identifiant d'un processeur de sécurité, tel que le processeur 76 les clés secrètes Kt1 et Kt2 contenues, respectivement, dans les mémoires 96 et 102.

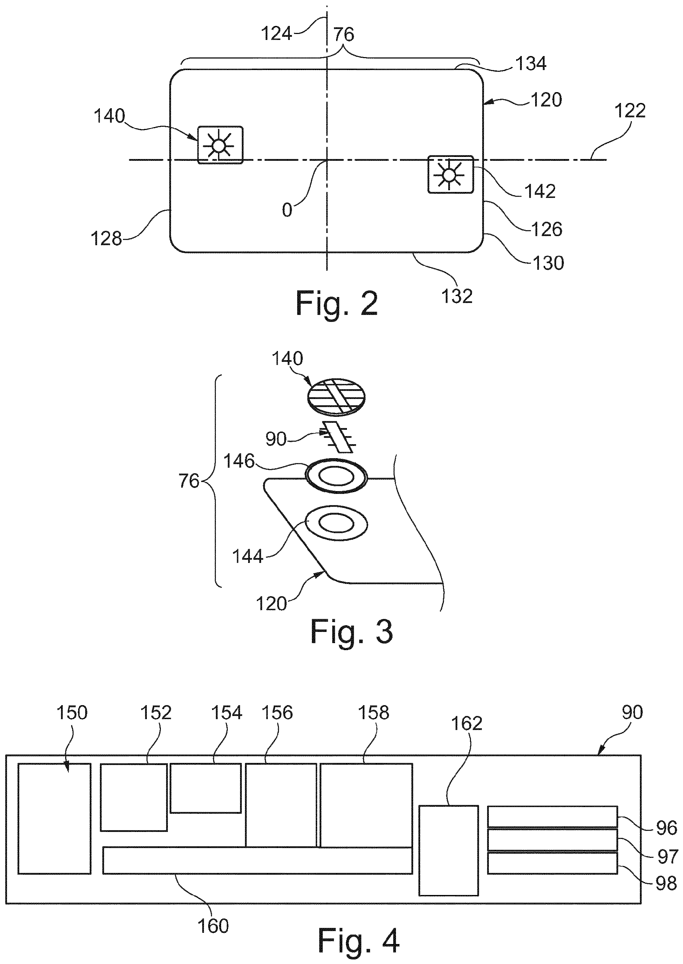

Les figures 2 et 3 représentent plus en détail le processeur 76.

Le processeur 76 comporte un support de préhension 120. Ici, le support 120 est une carte plane et sensiblement rectangulaire disposée à l'horizontal. Typiquement, la largeur et la longueur du support 120 sont au moins dix fois supérieures à son épaisseur dans la direction verticale. Par exemple, la largeur de la carte est inférieure à 11 cm ou à 9 cm. La longueur de la carte est inférieure à 6 ou 7 cm. L'épaisseur du support 120 est inférieure à 5 ou 2 mm. Le support 120 présente ici deux plans de symétrie verticaux 122 et 124. Sur la figure 2, ces plans 122 et 124 sont représentés par des lignes portant les mêmes références. Ces plans 122 et 124 sont orthogonaux entre eux. L'intersection de ces plans définit un axe vertical O.

Typiquement, le support 120 est réalisé en plastique. Ce support est par exemple conforme à la norme ISO 7816-1.

Le support 120 présente une face plane supérieure 126, une face plane inférieure opposée à la face 126, un bord gauche 128 et un bord droit 130. Les bords 128 et 130 sont raccordés les uns aux autres par des bords latéraux 132 et 134 parallèles entre eux.

Une puce électronique 90, 92 est susceptible d'être connectée au lecteur 86 par l'intermédiaire d'un connecteur électrique. Ici, le processeur 76 comporte deux connecteurs électriques 140 et 142 pour permettre le raccordement au lecteur 86, respectivement, des puces 90 et 92. Ici ces connecteurs 140 et 142 sont conformes à la norme ISO 7816-2. Ils comportent dès lors huit plots électriques aptes à coopérer avec des plots électriques correspondants du lecteur 86. Ces connecteurs permettent d'alimenter les puces et de communiquer avec ces puces.

Les puces 90 et 92 sont logées à l'intérieur du support 120 de telle manière que seuls les connecteurs électriques 140 et 142 sont accessibles depuis l'extérieur de ce support. A cet effet, typiquement, les puces électroniques sont cachées dans l'épaisseur du support 120. Ici, les connecteurs 140 et 142 sont affleurants sur la face supérieure 126 du support 120.

Chaque plot des connecteurs 140 et 142 est électriquement raccordé en permanence par une liaison filaire à une borne correspondante de la puce électronique.

Chaque puce électronique est déplaçable entre :
- une position insérée dans laquelle le connecteur électrique auquel elle est raccordée est en contact électrique avec le connecteur du lecteur 86 pour permettre l'alimentation et la communication entre cette puce et le terminal 10, et
- une position retirée dans laquelle le contact électrique entre les connecteurs 140 et 142 et le lecteur est interrompu de sorte que toute communication entre la puce et le terminal est rendue impossible dans cette position.

Chaque puce est logée dans un logement borgne creusé à partir d'une face du support 120. Un tel logement borgne 144 est par exemple représenté sur la figure 3. Ici, les deux logements borgnes recevant respectivement les puces 90 et 92 sont creusés à partir de la face supérieure 126 du support 120. Dans chaque logement borgne, la puce électronique est fixée sans aucun degré de liberté au support à l'aide, par exemple, de colle 146. Ici, le connecteur électrique 140 recouvre la puce électronique 90 de manière à la protéger de l'extérieur.

Dans ce mode de réalisation, les deux connecteurs électriques 140 et 142 sont disposés sur cette face supérieure 126 de manière à permettre le remplacement de la puce 90 par la puce 92 par un simple retournement du support 120. Par exemple, ici, les connecteurs 140 et 142 sont disposés de manière à ce que lorsqu'on fait tourner de 180° le support 120 autour de l'axe O, le connecteur 142 vient occuper la place du connecteur 140 et vice-versa. Cette opération de rotation du support 120 pour inverser les positions des connecteurs électriques est appelée « retournement ».

La figure 4 représente à titre d'illustration différents blocs fonctionnels de la puce électronique 90. Ici, la puce 90 comporte les blocs fonctionnels suivants :
- un gestionnaire 150 du protocole de communication entre le processeur 76 et le lecteur 86,
- des dispositifs matériels 152 de protection de la puce électronique contre des tentatives de cryptanalyse,
- un générateur 154 de nombres pseudo-aléatoires,
- un accélérateur cryptographique 156 formé en partie par une logique câblée et permettant d'accélérer l'exécution des algorithmes cryptographiques,
- une unité matérielle 158 de traitement central, plus connue sous l'acronyme anglais CPU (Central Processing Unit),
- un bus 160 reliant entre eux les différents éléments matériels de la puce 90,
- un module 162 de contrôle d'accès aux moyens 95 de stockage d'informations.

Le dispositif 152 est par exemple un film recouvrant au moins une partie de la puce électronique et qui libère un acide lorsqu'il est percé. Ainsi, si ce film est percé lors d'une tentative de cryptanalyse, alors l'acide vient détruire les différents composants sensibles de la puce 90 pour la rendre inutilisable. Le dispositif 152 peut également comporter un capteur d'intensité lumineuse ou de tension pour détecter des attaques par injonction de fautes.

La puce 92 est identique à la puce 90 sauf que :
- au moins une partie des données secrètes enregistrées dans la mémoire 102 sont différentes des données secrètes enregistrées dans la mémoire 96, et
- de préférence, la puce 92 est réalisée matériellement de façon différente de la puce 90.

Par exemple, ici, les clés secrètes Kt1 et Kt2 et les algorithmes ALGO1 et ALGO2 enregistrés, respectivement, dans les mémoires 96 et 102 sont différents. De plus, ici, les puces 90 et 92 sont fabriquées par des fabricants différents de sorte qu'elles présentent des différences matérielles l'une par rapport à l'autre. Par exemple, la puce 92 comporte des dispositifs matériels de protection différents de ceux de la puce 90. Ici, le code du système d'exploitation enregistré dans la mémoire 96 est différent de celui enregistré dans la mémoire 102, de même que les codes des routines utilisées pour traiter les messages ECM et EMM.

Enfin, la puce 92 est programmée pour commencer à traiter les messages ECM et EMM qu'après avoir reçu une instruction d'activation. Avant la réception de cette instruction d'activation, la puce de secours est dans un état désactivé. Dans cet état désactivé, la puce 92 réalise uniquement les opérations suivantes :
- elle répond à la mise sous tension, et
- elle compare les valeurs des bits à des positions prédéterminées dans les messages ECM ou EMM reçus à un ticket d'activation enregistré dans la mémoire 102. Si la valeur des bits reçus correspond à ce ticket d'activation, alors la puce 92 considère qu'elle vient de recevoir l'instruction d'activation. En réponse elle passe dans un état activé.

Dans l'état activé, la puce 92 remplit les mêmes fonctions que la puce 90 et, en particulier, traite les messages ECM et EMM pour déchiffrer les mots de contrôle.

Le fonctionnement du système 2 va maintenant être décrit plus en détail en référence au procédé de la figure 5 dans le cas particulier du terminal 10. Le fonctionnement des autres terminaux se déduit de celui décrit pour le terminal 10.

Initialement, lors d'une étape 198, le processeur 76 est fourni au titulaire du terminal 10. Dès lors, la puce 90 est dans la position insérée et la puce 92 est dans l'état désactivé.

Lors d'une étape 200, les mots de contrôle utilisés pour embrouiller le contenu multimédia diffusé sont chiffrés avec l'algorithme ALGO1 et à l'aide d'une clé mensuelle Km1. La clé mensuelle Km1 est elle-même chiffrée à l'aide des clés Kt1 de chaque terminal. Le cryptogramme de la clé Km1 ainsi obtenu est transmis en avance à chacun de ces terminaux par l'intermédiaire d'un message EMM.

Ensuite, lors d'une étape 202, le contenu multimédia embrouillé est multiplexé avec les messages ECM et EMM à transmettre aux terminaux puis diffusé vers chacun de ces terminaux par l'intermédiaire du réseau 8.

Lors d'une étape 204 chaque terminal reçoit le multiplex ainsi diffusé et le démultiplexe. Les messages ECM et EMM extraits de ce multiplex sont alors transmis par le terminal 10 vers le processeur 76.

Lors d'une étape 206, la puce 90 compare des droits d'accès contenus dans le message ECM reçu à des titres d'accès enregistrés dans la mémoire 97. Si les titres d'accès correspondent aux droits d'accès reçus, alors la puce 90 déchiffre les cryptogrammes CW_{i,t}* contenus dans le message ECM reçu à l'aide de l'algorithme ALGO1 et de la clé mensuelle Km1. Ensuite, le mot de contrôle ainsi déchiffré est transmis au terminal 10 par l'intermédiaire du lecteur 86.

En réponse, lors d'une étape 208, le terminal 10 désembrouille le contenu multimédia à l'aide du mot de contrôle déchiffré par la puce 90 puis affiche en clair le contenu multimédia ainsi déchiffré sur l'écran 84.

Les étapes 200 à 208 sont réitérées tant que la sécurité de la puce 90 n'a pas été compromise.

Lorsque la puce 90 a été victime d'une tentative réussie de cryptanalyse, lors d'une étape 210, l'opérateur du système 2 demande à ses abonnés de procéder au retournement de leurs processeurs de sécurité respectifs à une date déterminée. Dès lors, la puce de secours se trouve dans la position insérée dans le lecteur 86.

A cette date déterminée, lors d'une étape 212, le dispositif 6 diffuse à l'ensemble des terminaux un message ECM contenant l'instruction d'activation de la puce de secours.

Lors d'une étape 214, la puce 92 compare l'instruction d'activation contenue dans le message ECM reçu au ticket d'activation contenu dans sa mémoire 102. Si l'instruction d'activation ne correspond pas au ticket d'activation, alors la puce 92 reste dans l'état inactivé. Dans le cas contraire, elle bascule dans l'état activé lors d'une étape 216.

En parallèle, lors d'une étape 217, le dispositif 6 envoie, par l'intermédiaire de messages EMM, l'ensemble des titres d'accès de l'abonné du terminal 10 pour qu'ils soient stockés dans la puce 92.

A partir de la date déterminée, on procède à des étapes successives 218, 220, 222, 224 et 226 identiques, respectivement, aux étapes 200, 202, 204, 206 et 208 sauf que :
- lors de l'étape 218, c'est algorithme ALGO2 et les clés personnelles Kt2 stockées dans la mémoire 102 qui sont utilisés, et
- lors de l'étape 224, c'est la puce 92 qui traite les messages ECM et EMM reçus et non plus la puce 90.

Lors de l'étape 224, l'algorithme ALGO2 est utilisé à la place de l'algorithme ALGO1 pour déchiffrer le mot de contrôle.

La figure 6 représente un autre mode de réalisation d'un processeur 228 de sécurité susceptible d'être utilisé dans le système de la figure 1. Ce processeur 228 est identique au processeur 76 sauf que :
- le connecteur 142 est omis,
- les puces 90, 92 sont remplacées par des puces 230, 231, et
- un aiguilleur 232 est interposé entre les puces 230, 231 et le connecteur électrique 140.

Ainsi, dans ce mode de réalisation, le connecteur électrique 140 est commun aux puces 230 et 231. Le connecteur 140 comporte huit plots électriques 234 à 241 aptes à venir en contact électrique avec des plots correspondants du lecteur 86 pour établir la communication entre ce processeur 230 et le lecteur 86. Ces huit plots 234 à 241 sont raccordés en permanence par l'intermédiaire de liaisons filaires à huit entrées correspondantes de l'aiguilleur 232 désignées. Ces huit entrées sont désignées collectivement par la référence 242.

L'aiguilleur 232 comporte également :
- huit sorties 244 raccordées en permanence, respectivement, à huit bornes 246 correspondantes de la puce 230, et
- huit sorties 248 raccordées en permanence, respectivement, à huit bornes 250 correspondantes de la puce 231.

Sur la figure 6, les sorties 244 et 248 ainsi que les bornes 246 et 250 sont représentées par un seul point pour simplifier cette illustration. Pour les mêmes raisons, les liaisons électriques entre les sorties 244 et 248 et les bornes 246 et 250 ont simplement été représentées par une double flèche.

L'aiguilleur 232 bascule entre :
- une position nominale dans laquelle il raccorde uniquement les huit entrées 242 aux huit sorties 244 pour raccorder la puce 230 aux plots du connecteur 140, et
- une position de secours dans laquelle il raccorde électriquement uniquement les huit entrées 242 aux huit sorties 248 pour raccorder la puce 92 aux plots du connecteur 140.

L'aiguilleur 232 comporte également une entrée 252 de commande du basculement entre la position nominale et la position de secours. L'entrée 252 est ici raccordée en permanence au plot de masse 241 du connecteur 140 par l'intermédiaire d'un interrupteur irréversible 254. L'interrupteur 254 est uniquement déplaçable une seule fois :
- d'une position initiale, ici la position fermée, dans laquelle il raccorde électriquement l'entrée 252 au plot 241, vers
- une position finale, ici la position ouverte, dans laquelle il isole électriquement l'entrée 252 de ce plot 241.

Par exemple l'interrupteur 254 est un fusible susceptible de fondre en réponse à une commande de la puce 230. A cet effet, une liaison filaire 256 raccorde une borne de commande de l'interrupteur 254 à la puce 230.

La puce 230 est identique à la puce 90 sauf qu'elle est programmée pour commander le basculement de l'aiguilleur 232 de sa position nominale vers sa position de secours en réponse à la réception d'une instruction d'activation transmise dans un message ECM par le dispositif 6. Pour cela, la puce 230 commande l'ouverture de l'interrupteur 254. En réponse, l'aiguilleur 232 bascule de sa position nominale vers sa position de secours. Ainsi, seule la puce 230 est capable de commander le basculement de l'aiguilleur 232. De préférence, l'instruction d'activation est chiffrée avec une clé telle que la clé mensuelle Km1.

La puce 231 est identique à la puce 92 sauf qu'elle ne comporte pas de code capable de traiter l'instruction d'activation comme décrit dans le cas de la puce 92.

Le fonctionnement du système 2, lorsque celui-ci est équipé du processeur 228, va maintenant être décrit en référence au procédé de la figure 7.

Ce procédé débute par les mêmes étapes 198 à 208 que celles précédemment. A l'issue de l'étape 208, en cas de cryptanalyse réussie de la puce 230, le procédé procède directement à l'étape 212 sans passer par l'étape 210. En effet, dans ce mode de réalisation, il n'est plus nécessaire de retourner le processeur de sécurité pour déplacer la puce 231 vers sa position insérée.

Ensuite, on procède à une étape 280 identique à l'étape 214 sauf que l'instruction d'activation de la puce de secours est d'abord déchiffrée avec la clé mensuelle Km1 avant d'être comparée avec le ticket d'activation.

Dans le cas où l'instruction d'activation correspond au ticket d'activation, lors d'une étape 282, la puce 230 commande l'ouverture de l'interrupteur 254. Par exemple, la puce 230 fait fondre le fusible par l'intermédiaire de la liaison filaire 256.

En réponse, lors d'une étape 284, l'aiguilleur 232 bascule de sa position nominale vers sa position de secours. A partir de cet instant, la puce 231 est activée et peut traiter les messages ECM et EMM reçus par l'intermédiaire du connecteur 140. A l'inverse, la puce 230 est définitivement désactivée puisque le basculement inverse, c'est-à-dire de la position de secours vers la position nominale, est interdit par l'interrupteur 254.

En parallèle des étapes 280 à 284, on procède à des étapes 286, 288, 290, 292, 294 et 296 respectivement identiques aux étapes 217, 218, 220, 222, 224 et 226 du procédé de la figure 5.

De nombreux autres modes de réalisation sont possibles. Par exemple, le support de préhension peut avoir d'autres formes. Par exemple, en variante, le support de préhension peut prendre la forme d'une clé USB (Universal Serial Bus). Dans ce cas, les connecteurs électriques sont des connecteurs électriques conformes à la norme USB.

Dans le cas où le processeur comporte un connecteur électrique pour chaque puce, ces connecteurs électriques peuvent être disposés à d'autres emplacements que ceux représentés sur la figure 2. Par exemple, un connecteur électrique peut se trouver sur la face supérieure tandis que l'autre se trouve sur la face inférieure. Dans ce cas là, le retournement du processeur de sécurité consiste à effectuer une rotation de 180° autour d'un axe de rotation horizontal.

Le nombre de connecteurs électriques et le nombre de puces logées dans le support 120 peut être supérieur à deux. Par exemple, il est compris entre deux et quatre connecteurs électriques et donc deux et quatre puces.

De même, dans le mode de réalisation de la figure 6, le processeur 228 peut comporter plus de deux puces électroniques. Dans ce cas, la désactivation de la puce dans l'état activé entraine l'activation automatique d'une puce suivante. Par exemple, le même mécanisme que celui décrit pour activer la puce 231 est mis en oeuvre pour activer la puce suivante.

La puce de secours peut aussi être activée en réponse à une instruction d'activation contenue dans un message EMM. L'activation de la puce de secours, dans un autre mode de réalisation, est réalisée en téléchargeant une partie du code de cette puce à partir d'un message EMM reçu.

Ce qui a été décrit précédemment dans le cas d'un système d'émission et de réception de contenus multimédias linéaires s'applique également à un système d'émission et de réception de contenus multimédias non-linéaires tel qu'un système de vidéo à la demande (« Video On Demand » en anglais).

## Revendications

1. Système d'émission et de réception d'un contenu multimédia embrouillé, ce système comportant :
- un dispositif (6) de diffusion d'un premier contenu multimédia embrouillé puis d'un second contenu multimédia embrouillé, ce dispositif étant apte à chiffrer et à diffuser le contenu d'un premier message ECM (Entitlement Control Message) ou EMM (Entitlement Management Message) nécessaire pour désembrouiller le premier contenu multimédia selon un premier procédé cryptographique, utilisant une première clé cryptographique et un premier algorithme cryptographique, et à chiffrer et à diffuser le contenu d'un second message ECM ou EMM nécessaire pour désembrouiller le second contenu multimédia selon un second procédé cryptographique, utilisant une seconde clé cryptographique et un second algorithme cryptographique, différent du premier procédé cryptographique,
- des terminaux (10-12) aptes à recevoir les premier et second contenus multimédias embrouillés et les premier et second messages ECM ou EMM,
- au moins un processeur (228) de sécurité amovible équipé :
- d'un support (120) de préhension,
- d'une puce électronique nominale (230) apte à traiter le premier message ECM ou EMM reçu par le terminal, cette puce électronique nominale étant logée sans aucun degré de liberté à l'intérieur du support de préhension, et
- d'au moins une puce électronique (231) de secours apte à remplacer la puce nominale pour traiter le second message ECM ou EMM reçu par le terminal (10), la puce de secours (231) étant logée, sans aucun degré de liberté, à l'intérieur du même support de préhension que la puce nominale (230),
- chaque puce électronique comportant un calculateur électronique (94, 100) et une mémoire non volatile en lecture seule (96, 102) uniquement accessible par ce calculateur et chaque puce électronique étant déplaçable de façon réversible, par déplacement du processeur de sécurité, entre une position insérée dans laquelle la puce est apte à communiquer avec le terminal pour recevoir les messages ECM et EMM à traiter et une position retirée dans laquelle la communication entre la puce et le terminal est impossible, la mémoire non volatile en lecture seule de la puce nominale contenant des premières données secrètes nécessaires pour déchiffrer le contenu du premier message ECM ou EMM chiffré selon le premier procédé cryptographique, dans lequel la mémoire non volatile en lecture seule de la puce nominale est dépourvue de secondes données secrètes nécessaires pour déchiffrer le contenu du second message ECM ou EMM chiffré selon le second procédé cryptographique et la mémoire en lecture seule (102) de la puce de secours comporte les secondes données secrètes, et le processeur de sécurité comporte :
- un connecteur électrique (140) comportant des plots électriques (234-241) aptes à venir en contact avec des plots électriques correspondants du terminal en position insérée pour établir une connexion électrique entre l'une des puces électroniques et le terminal, et
- un aiguilleur commandable (232) apte à basculer d'une position nominale dans laquelle il raccorde électriquement les plots électriques du connecteur électrique (140) à des bornes correspondantes (246) de la puce nominale vers une position de secours dans laquelle il raccorde ces mêmes plots électriques à des bornes correspondantes (250) de la puce de secours,
- au moins un interrupteur irréversible (254) apte à basculer uniquement une seule fois d'une position initiale, dans laquelle il maintient en permanence l'aiguilleur (232) dans sa position nominale, vers une position finale dans laquelle il fait basculer l'aiguilleur vers sa position de secours, la puce nominale étant programmée pour commander le basculement de l'interrupteur irréversible en réponse à la réception d'une instruction d'activation.

2. Processeur de sécurité amovible tel que décrit dans la revendication 1.

3. Processeur selon la revendication 2, dans lequel seule la puce nominale (230) est apte à commander le basculement de l'aiguilleur (232) de la position nominale vers la position de secours.

4. Processeur selon la revendication 3, dans lequel la puce nominale (230) est programmée pour commander le basculement de l'aiguilleur (232) de la position nominale vers sa position de secours uniquement en réponse à une instruction d'activation contenue dans un message ECM ou EMM reçu.

5. Processeur selon l'une quelconque des revendications 2 à 4, dans lequel le support (120) de préhension est une carte dont la longueur et la largeur sont au moins dix fois supérieures à son épaisseur.

6. Procédé d'émission et de réception d'un contenu multimédia embrouillé, ce procédé comportant :
- la diffusion (202, 290) d'un premier contenu multimédia embrouillé puis d'un second contenu multimédia embrouillé,
- le chiffrement (200, 288) du contenu d'un premier message ECM ou EMM nécessaire pour désembrouiller le premier contenu multimédia selon un premier procédé cryptographique, utilisant une première clé cryptographique et un premier algorithme cryptographique, et le chiffrement du contenu d'un second message ECM ou EMM nécessaire pour désembrouiller le second contenu multimédia selon un second procédé cryptographique, utilisant une seconde clé cryptographique et un second algorithme cryptographique, différent du premier procédé cryptographique,
- la réception (204, 292) par des terminaux des premier et second contenus multimédias embrouillés et des premier et second messages ECM et EMM,
- la fourniture (198) d'au moins un processeur de sécurité amovible équipé :
- d'un support de préhension,
- d'une puce électronique nominale apte à traiter le premier message ECM ou EMM reçu par le terminal, cette puce électronique nominale étant logée sans aucun degré de liberté à l'intérieur du support de préhension, et
- d'au moins une puce électronique de secours apte à remplacer la puce nominale pour traiter le second message ECM ou EMM reçu par le terminal, la puce de secours étant logée, sans aucun degré de liberté, dans le même support de préhension que la puce nominale de manière à ce que la fourniture du processeur de sécurité et de la puce de secours ne forment qu'une seule et même étape,
- chaque puce électronique comportant un calculateur électronique et une mémoire non volatile en lecture seule uniquement accessible par ce calculateur et chaque puce électronique étant déplaçable de façon réversible, par déplacement du processeur de sécurité, entre une position insérée dans laquelle la puce est apte à communiquer avec le terminal pour recevoir les messages ECM et EMM à traiter et une position retirée dans laquelle la communication entre la puce et le terminal est impossible, la mémoire non volatile en lecture seule de la puce nominale contenant des premières données secrètes nécessaires pour déchiffrer le contenu du premier message ECM ou EMM chiffré selon le premier procédé cryptographique, dans lequel la fourniture (198) consiste à fournir un processeur de sécurité dans lequel la mémoire non volatile en lecture seule de la puce nominale est dépourvue de secondes données secrètes nécessaires pour déchiffrer le contenu du second message ECM ou EMM chiffré selon le second procédé et la mémoire en lecture seule de la puce de secours comporte les secondes données secrètes, et dans lequel ce processeur de sécurité comporte :
- un connecteur électrique (140) comportant des plots électriques (234-241) aptes à venir en contact avec des plots électriques correspondants du terminal en position insérée pour établir une connexion électrique entre l'une des puces électroniques et le terminal, et
- un aiguilleur commandable (232) apte à basculer d'une position nominale dans laquelle il raccorde électriquement les plots électriques du connecteur électrique (140) à des bornes correspondantes (246) de la puce nominale vers une position de secours dans laquelle il raccorde ces mêmes plots électriques à des bornes correspondantes (250) de la puce de secours,
- au moins un interrupteur irréversible (254) apte à basculer uniquement une seule fois d'une position initiale, dans laquelle il maintient en permanence l'aiguilleur (232) dans sa position nominale, vers une position finale dans laquelle il fait basculer l'aiguilleur vers sa position de secours, la puce nominale étant programmée pour commander le basculement de l'interrupteur irréversible en réponse à la réception d'une instruction d'activation.

## Patentansprüche

1. System zum Verschicken und Empfangen eines verschlüsselten Multimediainhalts, wobei dieses System Folgendes umfasst:
- eine Vorrichtung (6) zum Verbreiten eines ersten verschlüsselten Multimediainhalts, dann eines zweiten verschlüsselten Multimediainhalts, wobei diese Vorrichtung in der Lage ist den Inhalt einer ersten ECM(Entitlement Control Message)- oder EMM(Entitlement Management Message)-Nachricht, die erforderlich ist, um den ersten Multimediainhalt gemäß einem ersten kryptographischen Verfahren zu entschlüsseln, das einen ersten kryptographischen Schlüssel und einen ersten kryptographischen Algorithmus verwendet, zu chiffrieren und zu verbreiten, und den Inhalt einer zweiten ECM- oder EMM-Nachricht, die erforderlich ist, um den zweiten Multimediainhalt gemäß einem zweiten kryptographischen Verfahren zu entschlüsseln, das einen zweiten kryptographischen Schlüssel und einen zweiten kryptographischen Algorithmus verwendet, der von dem ersten kryptographischen Verfahren verschieden ist, zu chiffrieren und zu verbreiten,
- Endgeräte (10-12), die in der Lage sind, die ersten und zweiten verschlüsselten Multimediainhalte und die ersten und zweiten ECM- oder EMM-Nachrichten zu empfangen,
- mindestens einen entfernbaren Sicherheitsprozessor (228), der mit Folgendem ausgestattet ist:
- einem Träger (120) zum Halten,
- einem elektronischen Standardchip (230), der in der Lage ist, die erste ECM- oder EMM-Nachricht, die von dem Endgerät empfangen wird, zu verarbeiten, wobei dieser elektronische Standardchip im Innern des Trägers zum Halten ohne irgendeinen Freiheitsgrad angeordnet ist, und
- mindestens einem elektronischen Ersatzchip (231), der in der Lage ist, den Standardchip zu ersetzen, um die zweite ECM- oder EMM-Nachricht, die von dem Endgerät (10) empfangen wird, zu verarbeiten, wobei der Ersatzchip (231) im Innern desselben Trägers zum Halten des Standardchips (230) ohne irgendeinen Freiheitsgrad angeordnet ist,
- wobei jeder elektronische Chip einen elektronischen Rechner (94, 100) und einen nichtflüchtigen Nur-Lese-Speicher (96, 102) umfasst, der nur von diesem Rechner zugänglich ist, und wobei jeder elektronische Chip durch Verschieben des Sicherheitsprozessors zwischen einer eingeführten Position, in der der Chip in der Lage ist, mit dem Endgerät zu kommunizieren, um die zu verarbeitenden ECM- und EMM-Nachrichten zu empfangen, und einer herausgezogenen Position, in der die Kommunikation zwischen dem Chip und dem Endgerät unmöglich ist, reversibel verschiebbar ist, wobei der nichtflüchtige Nur-Lese-Speicher des Standardchips erste geheime Daten enthält, die erforderlich sind, um den Inhalt der ersten ECM- oder EMM-Nachricht zu dechiffrieren, die gemäß dem ersten kryptographischen Verfahren chiffriert wurde,
wobei der nichtflüchtige Nur-Lese-Speicher des Standardchips keine zweiten geheimen Daten aufweist, die erforderlich sind, um den Inhalt der zweiten ECM- oder EMM-Nachricht zu dechiffrieren, die gemäß dem zweiten kryptographischen Verfahren chiffriert wurde, und der Nur-Lese-Speicher (102) des Ersatzchips die zweiten geheimen Daten umfasst, und wobei der Sicherheitsprozessor Folgendes umfasst:
- einen elektrischen Verbinder (140), der elektrische Kontakte (234-241) umfasst, die in der Lage sind, mit entsprechenden elektrischen Kontakten des Endgeräts in eingeführter Position in Kontakt zu kommen, um eine elektrische Verbindung zwischen einem der elektronischen Chips und dem Endgerät herzustellen, und
- einen steuerbaren Umsteller (232), der in der Lage ist, von einer Standardposition, in der er die elektrischen Kontakte des elektrischen Verbinders (140) mit entsprechenden Anschlüssen (246) des Standardchips elektrisch verbindet, in eine Ersatzposition umzuschalten, in der er ebendiese elektrischen Kontakte mit entsprechenden Anschlüssen (250) des Ersatzchips verbindet,
- mindestens einen irreversiblen Schalter (254), der in der Lage ist, nur ein einziges Mal von einer Ausgangsposition, in der er den Umsteller (232) fortwährend in seiner Standardposition hält, in eine Endposition umzuschalten, in der er den Umsteller in seine Ersatzposition umschalten lässt, wobei der Standardchip programmiert ist, um das Umschalten des irreversiblen Schalters als Reaktion auf das Empfangen eines Aktivierungsbefehls zu steuern.

2. Entfernbarer Sicherheitsprozessor, wie in Anspruch 1 beschrieben.

3. Prozessor nach Anspruch 2, wobei nur der Standardchip (230) in der Lage ist, das Umschalten des Umstellers (232) von der Standardposition in die Ersatzposition zu steuern.

4. Prozessor nach Anspruch 3, wobei der Standardchip (230) programmiert ist, um das Umschalten des Umstellers (232) von der Standardposition in seine Ersatzposition nur als Reaktion auf einen Aktivierungsbefehl, der in einer empfangenen ECM- oder EMM-Nachricht enthalten ist, zu steuern.

5. Prozessor nach einem der Ansprüche 2 bis 4, wobei der Träger (120) zum Halten eine Karte ist, deren Länge und Breite mindestens zehn Mal größer sind als deren Dicke.

6. Verfahren zum Verschicken und Empfangen eines verschlüsselten Multimediainhalts, wobei dieses Verfahren Folgendes umfasst:
- das Verbreiten (202, 290) eines ersten verschlüsselten Multimediainhalts, dann eines zweiten verschlüsselten Multimediainhalts,
- das Chiffrieren (200, 288) des Inhalts einer ersten ECM- oder EMM-Nachricht, die erforderlich ist, um den ersten Multimediainhalt gemäß einem ersten kryptographischen Verfahren, das einen ersten kryptographischen Schlüssel und einen ersten kryptographischen Algorithmus verwendet, zu entschlüsseln, und das Chiffrieren des Inhalts einer zweiten ECM- oder EMM-Nachricht, die erforderlich ist, um den zweiten Multimediainhalt gemäß einem zweiten kryptographischen Verfahren, das einen zweiten kryptographischen Schlüssel und einen zweiten kryptographischen Algorithmus verwendet, der von dem ersten kryptographischen Verfahren verschieden ist, zu entschlüsseln,
- das Empfangen (204, 292) der ersten und zweiten verschlüsselten Multimediainhalte und der ersten und zweiten ECM- und EMM-Nachrichten durch Endgeräte,
- das Bereitstellen (198) mindestens eines entfernbaren Sicherheitsprozessors, der mit Folgendem ausgestattet ist:
- einem Träger zum Halten,
- einem elektronischen Standardchip, der in der Lage ist, die erste ECM- oder EMM-Nachricht, die von dem Endgerät empfangen wird, zu verarbeiten, wobei dieser elektronische Standardchip im Innern des Trägers zum Halten ohne irgendeinen Freiheitsgrad angeordnet ist, und
- mindestens einem elektronischen Ersatzchip, der in der Lage ist, den Standardchip zu ersetzen, um die zweite ECM- oder EMM-Nachricht, die von dem Endgerät empfangen wird, zu verarbeiten, wobei der Ersatzchip ohne irgendeinen Freiheitsgrad in demselben Träger zum Halten angeordnet ist wie der Standardchip, so dass das Bereitstellen des Sicherheitsprozessors und des Ersatzchips nur einen einzigen Schritt darstellt,
- wobei jeder elektronische Chip einen elektronischen Rechner und einen nichtflüchtigen Nur-Lese-Speicher umfasst, der nur von diesem Rechner zugänglich ist, und wobei jeder elektronische Chip durch Verschieben des Sicherheitsprozessors zwischen einer eingeführten Position, in der der Chip in der Lage ist, mit dem Endgerät zu kommunizieren, um die zu verarbeitenden ECM- und EMM-Nachrichten zu empfangen, und einer herausgezogenen Position, in der die Kommunikation zwischen dem Chip und dem Endgerät unmöglich ist, reversibel verschiebbar ist, wobei der nichtflüchtige Nur-Lese-Speicher des Standardchips erste geheime Daten enthält, die erforderlich sind, um den Inhalt der ersten ECM- oder EMM-Nachricht zu dechiffrieren, die gemäß dem ersten kryptographischen Verfahren chiffriert wurde, wobei
das Bereitstellen (198) darin besteht, einen Sicherheitsprozessor bereitzustellen, wobei der nichtflüchtige Nur-Lese-Speicher des Standardchips keine zweiten geheimen Daten aufweist, die erforderlich sind, um den Inhalt der zweiten ECM- oder EMM-Nachricht zu dechiffrieren, die gemäß dem zweiten Verfahren chiffriert wurde, und der Nur-Lese-Speicher des Ersatzchips die zweiten geheimen Daten umfasst, und wobei der Sicherheitsprozessor Folgendes umfasst:
- einen elektrischen Verbinder (140), der elektrische Kontakte (234-241) umfasst, die in der Lage sind, mit entsprechenden elektrischen Kontakten des Endgeräts in eingeführter Position in Kontakt zu kommen, um eine elektrische Verbindung zwischen einem der elektronischen Chips und dem Endgerät herzustellen, und
- einen steuerbaren Umsteller (232), der in der Lage ist, von einer Standardposition, in der er die elektrischen Kontakte des elektrischen Verbinders (140) mit entsprechenden Anschlüssen (246) des Standardchips elektrisch verbindet, in eine Ersatzposition umzuschalten, in der er ebendiese elektrischen Kontakte mit entsprechenden Anschlüssen (250) des Ersatzchips verbindet,
- mindestens einen irreversiblen Schalter (254), der in der Lage ist, nur ein einziges Mal von einer Ausgangsposition, in der er den Umsteller (232) fortwährend in seiner Standardposition hält, in eine Endposition umzuschalten, in der er den Umsteller in seine Ersatzposition umschalten lässt, wobei der Standardchip programmiert ist, um das Umschalten des irreversiblen Schalters als Reaktion auf das Empfangen eines Aktivierungsbefehls zu steuern.

## Claims

1. System for transmitting and receiving a scrambled multimedia content, this system comprising:
- a device (6) for broadcasting a first scrambled multimedia content and then a second scrambled multimedia content, this device being able to encipher and to broadcast the content of a first ECM (Entitlement Control Message) or EMM (Entitlement Management Message) message required to descramble the first multimedia content according to a first cryptographic method, using a first cryptographic key and a first cryptographic algorithm, and to encipher and to broadcast the content of a second ECM or EMM message required to descramble the second multimedia content according to a second cryptographic method, using a second cryptographic key and a second cryptographic algorithm, different from the first cryptographic method,
- terminals (10-12) able to receive the first and second scrambled multimedia contents and the first and second ECM or EMM messages,
- at least one removable security processor (228) equipped:
- with a gripping support (120),
- with a nominal electronic chip (230) able to process the first ECM or EMM message received by the terminal, this nominal electronic chip being housed without any degree of freedom inside the gripping support, and
- with at least one backup electronic chip (231) able to replace the nominal chip so as to process the second ECM or EMM message received by the terminal (10), the backup chip (231) being housed, without any degree of freedom, inside the same gripping support as the nominal chip (230),
- each electronic chip comprising an electronic calculator (94, 100) and a read-only nonvolatile memory (96, 102) solely accessible by this calculator and each electronic chip being displaceable in a reversible manner, by displacement of the security processor, between an inserted position in which the chip is able to communicate with the terminal so as to receive the ECM and EMM messages to be processed and a withdrawn position in which communication between the chip and the terminal is impossible, the read-only nonvolatile memory of the nominal chip containing first secret data required to decipher the content of the first ECM or EMM message enciphered according to the first cryptographic method,
in which
the read-only nonvolatile memory of the nominal chip is devoid of second secret data required to decipher the content of the second ECM or EMM message enciphered according to the second cryptographic method and the read-only memory (102) of the backup chip comprises the second secret data, and the security processor comprises:
- an electrical connector (140) comprising electrical pads (234-241) able to come into contact with corresponding electrical pads of the terminal in the inserted position so as to establish an electrical connection between one of the electronic chips and the terminal, and
- a controllable splitter (232) able to toggle from a nominal position in which it electrically links the electrical pads of the electrical connector (140) to corresponding tags (246) of the nominal chip to a backup position in which it links these same electrical pads to corresponding tags (250) of the backup chip,
- at least one irreversible switch (254) able to toggle solely just once from an initial position, in which it permanently maintains the splitter (232) in its nominal position, to a final position in which it causes the splitter to toggle to its backup position, the nominal chip being programmed to control the toggling of the irreversible switch in response to the receipt of an activation instruction.

2. Removable security processor as described in Claim 1.

3. Processor according to Claim 2, in which only the nominal chip (230) is able to control the toggling of the splitter (232) from the nominal position to the backup position.

4. Processor according to Claim 3, in which the nominal chip (230) is programmed to control the toggling of the splitter (232) from the nominal position to its backup position solely in response to an activation instruction contained in an ECM or EMM message received.

5. Processor according to any one of Claims 2 to 4, in which the gripping support (120) is a card whose length and width are at least ten times greater than its thickness.

6. Method for transmitting and receiving a scrambled multimedia content, this method comprising:
- the broadcasting (202, 290) of a first scrambled multimedia content and then of a second scrambled multimedia content,
- the enciphering (200, 288) of the content of a first ECM or EMM message required to descramble the first multimedia content according to a first cryptographic method, using a first cryptographic key and a first cryptographic algorithm, and the enciphering of the content of a second ECM or EMM message required to descramble the second multimedia content according to a second cryptographic method, using a second cryptographic key and a second cryptographic algorithm, different from the first cryptographic method,
- the reception (204, 292) by terminals of the first and second scrambled multimedia contents and of the first and second ECM and EMM messages,
- the provision (198) of at least one removable security processor equipped:
- with a gripping support,
- with a nominal electronic chip able to process the first ECM or EMM message received by the terminal, this nominal electronic chip being housed without any degree of freedom inside the gripping support, and
- with at least one backup electronic chip able to replace the nominal chip so as to process the second ECM or EMM message received by the terminal, the backup chip being housed, without any degree of freedom, in the same gripping support as the nominal chip in such a way that the provision of the security processor and of the backup chip form just a single same step,
- each electronic chip comprising an electronic calculator and a read-only nonvolatile memory solely accessible by this calculator and each electronic chip being displaceable in a reversible manner, by displacement of the security processor, between an inserted position in which the chip is able to communicate with the terminal so as to receive the ECM and EMM messages to be processed and a withdrawn position in which communication between the chip and the terminal is impossible, the read-only nonvolatile memory of the nominal chip containing first secret data required to decipher the content of the first ECM or EMM message enciphered according to the first cryptographic method,
in which
the provision (198) consists in providing a security processor in which the read-only nonvolatile memory of the nominal chip is devoid of second secret data required to decipher the content of the second ECM or EMM message enciphered according to the second method and the read-only memory of the backup chip comprises the second secret data, and in which this security processor comprises:
- an electrical connector (140) comprising electrical pads (234-241) able to come into contact with corresponding electrical pads of the terminal in the inserted position so as to establish an electrical connection between one of the electronic chips and the terminal, and
- a controllable splitter (232) able to toggle from a nominal position in which it electrically links the electrical pads of the electrical connector (140) to corresponding tags (246) of the nominal chip to a backup position in which it links these same electrical pads to corresponding tags (250) of the backup chip,
- at least one irreversible switch (254) able to toggle solely just once from an initial position, in which it permanently maintains the splitter (232) in its nominal position, to a final position in which it causes the splitter to toggle to its backup position, the nominal chip being programmed to control the toggling of the irreversible switch in response to the receipt of an activation instruction.
